# EUROPÄISCHE PATENTSCHRIFT

(11) **EP 2 994 339 B1**
(45) Veröffentlichungstag und Bekanntmachung des Hinweises auf die Patenterteilung: **30.06.2021**
(21) Anmeldenummer: 14714685.6
(22) Anmeldetag: 31.03.2014
(51) Int. Cl.: B60L 1/02, B60L 53/14, B60L 53/20, B60L 53/22, B60L 53/24

(54) **HOCHVOLT-BORDNETZSTRUKTUR FÜR FAHRZEUGE**
HIGH VOLTAGE ON-BOARD NETWORK STRUCTURE FOR VEHICLES
STRUCTURE DE RÉSEAU DE BORD HAUTE-TENSION POUR VÉHICULES

(30) Priorität: 06.05.2013 DE 102013208287
(43) Veröffentlichungstag der Anmeldung: 16.03.2016
(73) Patentinhaber: Robert Bosch GmbH, 70442 Stuttgart (DE)
(72) Erfinder: VOEGELE, Andreas, 77815 Buehl (DE)
(86) Internationale Anmeldenummer: PCT/EP2014/056448
(87) Internationale Veröffentlichungsnummer: WO 2014/180606

(56) Entgegenhaltungen:
- EP-A2- 2 179 882
- US-A1- 2009 103 341
- US-A1- 2010 237 694
- US-A1- 2011 170 318
- None

## Beschreibung

Die vorliegende Erfindung betrifft Energieverteilungssysteme in Fahrzeugen. Insbesondere betrifft die vorliegende Erfindung einen vereinfachten Aufbau bei gleichzeitig verbesserter Ansteuerung einer elektrischen Maschine eines Energieversorgungssystems. Weiter insbesondere betrifft die vorliegende Erfindung ein Energieversorgungssystem für Fahrzeuge sowie ein Fahrzeug, insbesondere Elektro- oder Hybridfahrzeug.

### Stand der Technik

Die Druckschrift US 2010/237694 A1 offenbart ein Spannungskonvertersystem für ein Fahrzeug. Das Spannungskonvertersystem umfasst eine Vielzahl von Spulen und Schaltelementen, um entsprechend dem Betriebszustand des Systems einen Spannungskonverter zur Ansteuerung des Antriebsmotors vom Zwischenkreis zu trennen.

Bordnetz-Topologien in Elektro- bzw. Hybridfahrzeugen weisen zumindest ein Energiespeicherelement zum Vorhalten von zum Beispiel elektrisch gespeicherter Energie sowie zumindest ein Antriebselement wie z.B. einen Elektromotor bzw. eine elektrische Maschine als Verbraucher der gespeicherten Energie zum Antrieb des Fahrzeugs auf. Dabei ist meist ein Energiespeicherelement, ein Hochspannungsakkumulator bzw. Batteriesystem unter Verwendung eines Inverters bzw. Gleichspannungs-Wechselspannungskonverters (DC-AC- Konverter) mit der elektrischen Maschine verbunden und bauartbedingt eingerichtet, eine Gleichspannung abzugeben. Dabei setzt der Konverter die von dem Energiespeicherelement gelieferte Gleichspannung in eine für den Betrieb des Motorelementes bzw. der elektrischen Maschine geeignete Wechselspannung um.

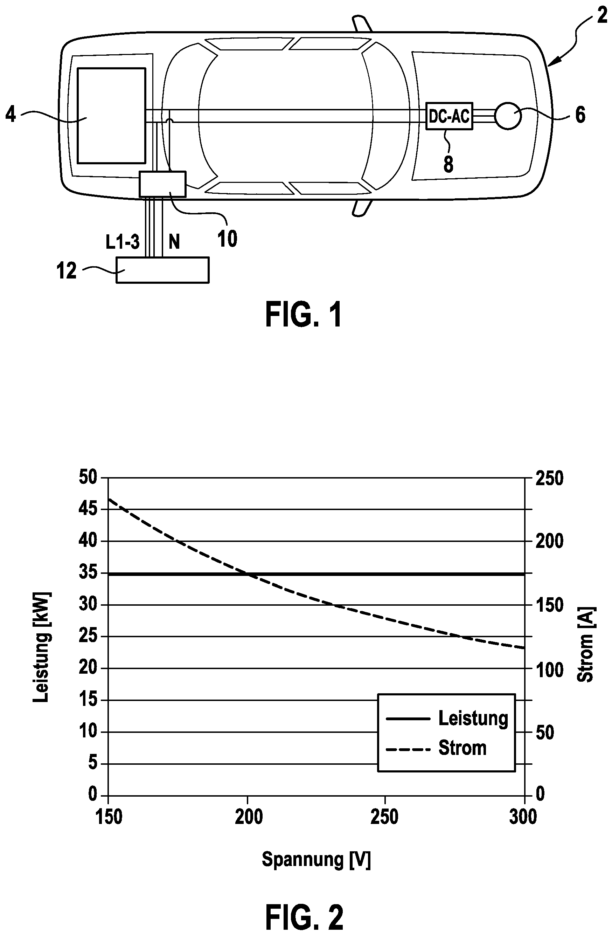

Figur 1 zeigt eine herkömmliche Bordnetzstruktur für Elektro- bzw. Hybridfahrzeuge. Im Leitungspfad vom Energiespeicherelement 4 zum Elektromotor bzw. der elektrischen Maschine 6 ist Inverter bzw. DC-AC-Konverter 8 angeordnet. Das Energieversorgungssystem 2 weist weiterhin ein Ladegerät 10 auf, das einerseits mit dem Energieversorgungssystem 2 und andererseits mit einer externen Energiequelle 12 wie beispielsweise einem Stromnetz 12 gekoppelt ist. Exemplarisch wird das Stromnetz 12 unter Verwendung von drei Phasen L1-3 an das Ladegerät angekoppelt. Andere

Verbindungen zwischen Stromnetz 12 und Ladegerät 10 sind denkbar. Ladegerät 10 ist dabei eingerichtet, aufgrund der externen Energiezufuhr 12 das Energiespeicherelement 4 aufzuladen.

Herkömmliche Energiespeicherelemente 4 weisen regelmäßig eine vom Ladezustand abhängige variable Klemmenspannung auf, die über die interne Verkabelung des Energieversorgungssystems 2 auch am Konverter 8 anliegt. Figur 2 zeigt einen exemplarischen Verlauf des vom Energiespeicherelementes 4 bereitgestellten Stromflusses in Abhängigkeit von der Klemmenspannung des Energiespeicherelementes 4 dar. Da die abgegebene Leistung des Energiespeicherelementes 4, wie in Figur 2 dargestellt, im Wesentlichen konstant unabhängig von der Klemmenspannung ist, bedingt eine niedrigere Klemmenspannung einen erhöhten Stromfluss und umgekehrt.

Bei direkt angeschlossenem Konverter 8 muss dieser somit derart dimensioniert sein, sowohl die höchstmögliche als auch die niedrigstmögliche Spannung und sowohl den höchstmöglichen als auch den niedrigstmöglichen Strom verarbeiten zu können.

Die elektrische Leistung, die der Konverter 8 dabei umsetzt, ist im Wesentlichen vom Strom begrenzt, der, unabhängig von der anliegenden Klemmenspannung, einen bestimmten Wert nicht überschreiten darf. Für diesen maximalen Strom muss somit der Konverter 8 ausgelegt sein.

Um nun einen Konverter optimiert bereitstellen zu können, kann ein Gleichspannungswandler 14 zwischen dem Energiespeicherelement 4 und dem Konverter 8 vorgesehen sein. Hierdurch kann die variable vom Energiespeicherelement 4 abgegebene variable Spannung, exemplarisch im Bereich von 150 V bis 300 V, umgewandelt bzw. auf ein Spannungsniveau konvertiert werden, welches im Wesentlichen konstant ist, exemplarisch 400 V. Hierdurch kann der Konverter 8 derart ausgebildet werden, im Wesentlichen einen definierten Betriebsarbeitspunkt aus Stromfluss und Spannung einzunehmen, ohne dabei auf einen großen Strombereich ausgelegt zu sein. In anderen Worten wird über die definierte Spannung im Zwischenkreis zwischen Gleichspannungswandler 14 und Konverter 8 aufgrund der im Wesentlichen konstanten Leistung auch der zugehörige Stromfluss auf einen im Wesentlichen konstanten Wert festgelegt. Für diesen Wert kann nun der Konverter 8 bevorzugt ausgelegt sein, ohne dabei Reserven für einen möglicherweise erhöhten Strom bei verringerter Spannung berücksichtigen zu müssen. Der Konverter 8 bzw. Inverter arbeitet somit im Wesentlichen bei konstanten Spannungsverhältnissen. Hierdurch mag insbesondere erreicht werden, dass die Stromtragfähigkeit der Halbleiter im Konverter 8 halbiert werden kann. Entsprechend können alle Eingangsparameter auf einen weit geringeren Spannungs- und Strombereich ausgelegt werden. Hierdurch lassen sich ein konstruktiver Aufwand reduzieren und Materialkosten einsparen.

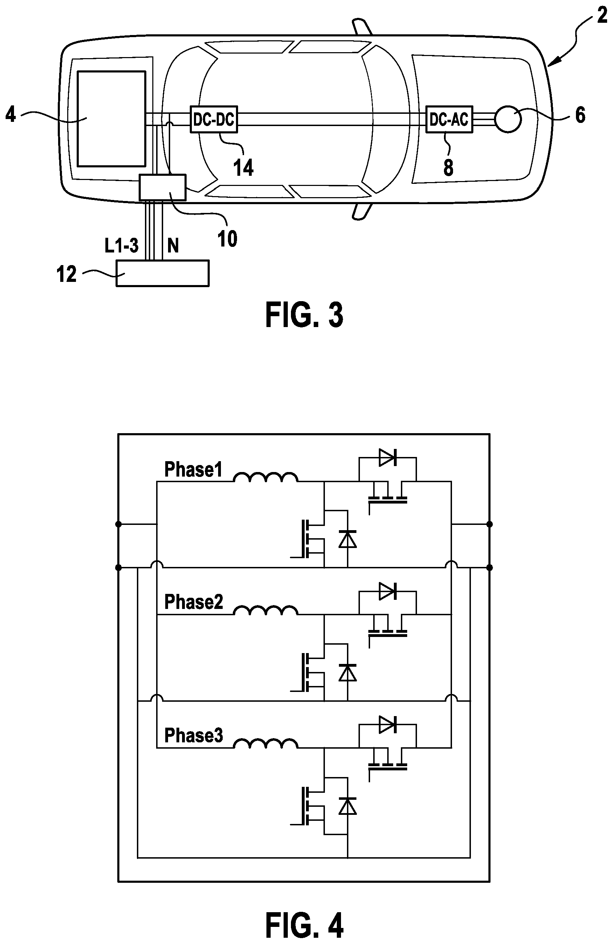

Eine exemplarische Implementierung eines Gleichspannungswandlers zeigt Figur 4. Gleichspannungswandler 14 bzw. DC-DC-Wandler 14 weist dabei exemplarisch eine Ausgestaltung als ein mehrphasiges System auf, stellt sich somit als Verbund mehrerer einzelner Spannungswandler dar. Durch einen derartigen Aufbau ergeben sich technische Vorteile wie zum Beispiel die Reduktion von Spannungs- und Stromrippel.

Ein solcher Gleichspannungswandler 14, eingesetzt gemäß Figur 3, ist dabei jedoch eine zusätzliche Komponente im Energieversorgungssystem eines Fahrzeuges, die selbst einen gewissen Energieverbrauch aufweist und auch, schon allein aufgrund ihres Gewichts, einen erhöhten Energiebedarf zum Antrieb eines Fahrzeuges bedingt. Herkömmlich ist weiterhin noch ein Ladegerät 10 vorgesehen, welches eine externe Energiezufuhr 12 derart in das Energieversorgungssystem einkoppelt, um das Energiespeicherelement 4 laden zu können.

Wird somit eine herkömmliche Bordnetzstruktur (vgl. Figur 1) mit einem DC-DC-Wandler zur Bereitstellung einer konstanten Versorgungsspannung an den Konverter erweitert (vgl. Figur 3), so wird dadurch die Anzahl der Komponenten und damit insbesondere die Anzahl von Halbleiter und deren Ansteuerung erhöht.

### Offenbarung der Erfindung

Ein Aspekt der vorliegenden Erfindung kann somit darin gesehen werden, eine Bordnetzstruktur bzw. ein Energieversorgungssystem für Fahrzeuge bereitzustellen, das einerseits einen Konverter bzw. Inverter mit einer im Wesentlichen konstanten Spannung betreibt, dabei jedoch eine verbesserte Anbindung der Komponenten des Energieversorgungssystems und einen vereinfachten Aufbau bereitstellt. Insbesondere sollen die Anzahl der Halbleiter und deren Ansteuerung im Wesentlichen nicht erhöht werden.

Demgemäß wird ein Energieversorgungssystem für Fahrzeuge sowie ein Fahrzeug, insbesondere Elektrohybridfahrzeug gemäß den unabhängigen Ansprüchen angezeigt. Bevorzugte Ausgestaltungen ergeben sich aus den abhängigen Ansprüchen.

Erfindungsgemäß wird nun der Gleichspannungswandler derart abgeändert, so dass im Wesentlichen ein Ladegerät entfallen kann, welches regelmäßig auch im Fahrzeug angeordnet wäre. Der Gleichspannungswandler, wie er im erfindungsgemäßen Energieversorgungssystem verwendet wird, ermöglicht somit in einem Ladebetrieb direkt die Einspeisung einer (z.B. 3-phasigen) externen Energiequelle zum Aufladen des Energiespeicherelementes, während in einem Fahrbetrieb der Gleichspannungswandler einem Konverter eine im Wesentlichen konstante Betriebsspannung bzw. Versorgungsspannung zur Verfügung stellen kann. Hierdurch lässt sich ein Energieversorgungssystem für Fahrzeuge bereitstellen, bei dem die Ladefunktion des Energiespeicherelementes im Gleichspannungswandler integriert ist und somit ein Konverter verwendet werden kann, welcher auf einen kleinen Spannungsbereich optimiert ist.

Erfindungsgemäß wird ein Gleichspannungswandler mit Ladefunktion exemplarisch mit einer Phasenanzahl von drei oder mehr Phasen aufgebaut. In einem normalen Fahrbetrieb oder auch Vorwärtsbetrieb sind die Phasen dabei über Schütze bzw. Schalter, welche dabei geschlossen sind, an dem Zwischenkreis angeschlossen, an dem auch der Konverter angeschlossen ist bzw. welcher Zwischenkreis den Konverter speist. Aufgrund der nicht angeschlossenen bzw. angesteckten externen Energiequelle weist der Gleichspannungswandler somit im Wesentlichen eine durchverbundene Struktur auf.

Soll nun das Energiespeicherelement geladen werden, werden die Schalter geöffnet und ein exemplarisch 3-phasig ausgebildetes Stromnetz bzw. Energiequelle direkt mit dem Gleichspannungswandler verbunden, der nun in einem Rückwärtsbetrieb als Ladegerät bzw. Umrichter arbeitet und eine konstante Ladespannung bzw. einen Ladestrom dem Energiespeicherelement bzw. Fahrzeugakkumulator zur Verfügung stellt.

Somit kann ein im Fahrzeug vorgesehener Konverter für einen engen Eingangsspannungsbereich optimiert werden, was auch Vorteile in Bezug auf Kosten und Volumen ergibt. Es werden keine zusätzlichen Komponenten für ein Ladegerät benötigt, da die Funktionalität vom Gleichspannungswandler übernommen wird.

Der Spannungswandler ist in der Regel wegen der Rekuperation, also der Energierückgewinnung im Fahrbetrieb, als ein bidirektionaler Wandler ausgebildet, so dass beim Betrieb des Wandlers als Ladegerät die Energie des Energiespeicherelementes auch in die externe Energiequelle, z.B. ein Stromnetz, zurückgespeist werden kann. Somit können eine Vielzahl erfindungsgemäßer Energieversorgungssysteme eine Energiespeicherlösung für ein regionales bzw. nationales Energiesystem bereitstellen.

Erfindungsgemäße Gleichspannungswandler können dabei für eine Vielzahl von Einsatzszenarien optimiert werden, zum Beispiel für solche im niedrigen Leistungsbereich mit langer Ladezeit ohne aktive Kühlung oder auch als Hochleistungswandler für eine Schnellladung mit aktiver Kühlung.

Das erfindungsgemäße Energieversorgungssystem ist gleichfalls eingerichtet, in einem Rekuperationsbetrieb von der elektrischen Maschine gewonnene Energie, beispielsweise durch eine gebremste Bergabfahrt, aufzubereiten und in das Energiespeicherelement zurückzuführen.

Ausführungsformen der Erfindung sind in den Zeichnungen dargestellt und in der nachfolgenden Beschreibung näher erläutert.

Es zeigen
- Figur 1: eine exemplarische Ausgestaltung eines Energieversorgungssystems für Elektro- bzw. Hybridfahrzeuge;
- Figur 2: einen Verlauf des vom Energiespeicherelementes bereitgestellten Stromflusses in Abhängigkeit von der Klemmenspannung des Energiespeicherelementes;
- Figur 3: eine weitere exemplarische Ausgestaltung eines Energieversorgungssystems;
- Figur 4: eine exemplarische Ausgestaltung eines Gleichspannungswandlers;
- Figur 5: eine exemplarische Ausgestaltung eines Energieversorgungssystems gemäß der vorliegenden Erfindung; und
- Figur 6: eine exemplarische Ausgestaltung eines Gleichspannungswandlers gemäß der vorliegenden Erfindung.

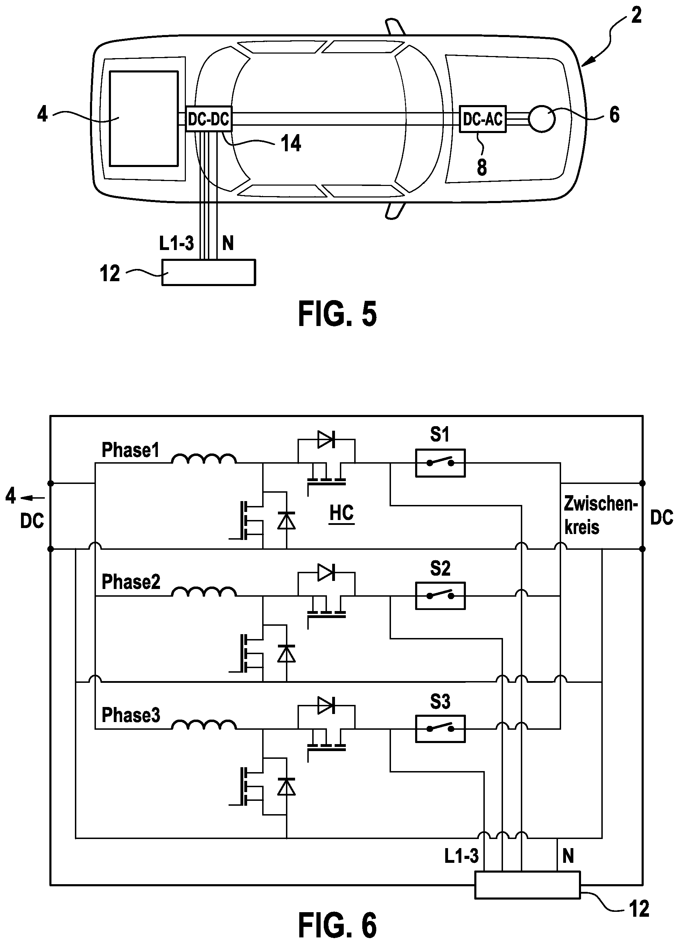

Weiter Bezug nehmend auf Figur 5 wird eine exemplarische Ausgestaltung eines Energieversorgungssystems gemäß der vorliegenden Erfindung dargestellt.

Ein Energiespeicherelement 4 ist über einen Gleichspannungswandler 14 über einen Zwischenkreis mit einem Gleichspannungs-Wechselspannungs-Konverter 8 bzw. Inverter 8 verbunden, welcher seinerseits mit der elektrischen Maschine 6, z.B. einem Elektromotor, verbunden ist. Das Energiespeicherelement 4 gibt dabei (analog Figur 2) je nach Ladezustand eine wechselnde bzw. variable Klemmenspannung an den Gleichspannungswandler 14 ab, der wiederum den Zwischenkreis speist. Exemplarisch kann dabei das Energiespeicherelement 4 beispielsweise eine variable Spannung im Bereich von 150 bis 300 V an den Gleichspannungswandler 14 bereitstellen, während dieser exemplarisch 400 V oder eine andere konstruktionsbedingte Gleichspannung in den Zwischenkreis einkoppelt und dabei dem Konverter 8 bereitstellt. Konverter 8 kann somit auf diesen im Wesentlichen engen Spannungs- und Strombereich hin optimiert sein. Konverter 8 stellt nachfolgend der elektrischen Maschine 6 eine Wechselspannung für deren Betrieb zur Verfügung.

Eine externe Energiequelle 12, exemplarisch ein Stromnetz 12 mit drei Phasen Ll-3 sowie Nullleiter N, ist direkt mit dem Gleichspannungswandler 14 verbunden, insbesondere ohne zwischengeschaltetes, separates Ladegerät. Weiter Bezug nehmend auf Figur 6 wird eine exemplarische Ausgestaltung eines Gleichspannungswandlers gemäß der vorliegenden Erfindung dargestellt.

Figur 6 zeigt die direkte Einkopplung der drei Phasen Ll-3 der externen Energiequelle 12 in den Gleichspannungswandler 14. Dieser ist exemplarisch, abhängig von der Betriebsrichtung, im Vorwärtsbetrieb bzw. Fahrbetrieb als Aufwärtswandler, und im Rückwärtsbetrieb bzw. Ladebetrieb als Abwärtswandler bzw. als Step-Down-Converter oder Buck-Converter ausgebildet. Exemplarisch stellt Figur 6 einen sogenannten Zwei-Quadranten-Wandler dar, bei dem auf seiner in Figur 6 linken Seite eine Spannung kleiner oder gleich seiner rechten Seite bereitgestellt wird, wobei ein Stromfluss ist in beide Richtungen möglich ist. Auch die Verwendung eines 4-Quadranten Wandler ist denkbar.

Die externe Energiequelle wird dabei im Wesentlichen direkt in die Phasen, welche am Zwischenkreis angeordnet sind, angeschlossen, wobei der Zwischenkreis jedoch über Schaltelemente Sl-3 vom Gleichspannungswandler 14 entkoppelt wird. Somit "sieht" die externe Quelle 12 bei Einspeisung der Energie im Wesentlichen den Gleichspannungswandler 14 als Abwärtswandler und lädt darüber das Energiespeicherelement 4. Dies stellt dabei den Ladebetrieb bzw. Rückwärtsbetrieb dar.

In einem Vorwärtsbetrieb bzw. Fahrbetrieb ist regelmäßig eine externe Energiequelle 12 nicht mit dem Gleichspannungswandler 14 verbunden, eine Ladekabel beispielsweise abgesteckt, während die Schaltelemente Sl-3 in einem geschlossenen Zustand sind, so dass der Gleichspannungswandler 14 vom Energiespeicherelement 4 in Richtung der elektrischen Maschine 6 gesehen einen Aufwärtswandlerbetrieb darstellt und dabei dem Zwischenkreis über die geschlossenen Schaltelemente Sl-3 eine im Wesentlichen konstante Betriebsspannung bzw. Versorgungsspannung für den Konverter 8 bereitstellt.

Die gemäß Figur 6 dargestellte Ausgestaltung des erfindungsgemäßen Gleichspannungswandlers 14 ist dabei insbesondere als ein Prinzipschaltbild eines Gleichspannungswandlers bzw. DC-DC-Wandlers oder auch DC-DC-Chargers anzusehen. Eine konkrete Implementierung kann sich aufgrund einer geforderten Ausgestaltung der einzelnen Komponenten bzw. des gesamten Energieversorgungssystems ergeben.

## Patentansprüche

1. Energieversorgungssystem (2) für Fahrzeuge, aufweisend eine elektrische Maschine (6);
ein Gleichspannungs-Wechselspannungs-Konverter (8) mit einem Gleichspannungsanschluss und eine Wechselspannungsanschluss; und ein Energiespeicherelement (4);
wobei das Energiespeicherelement (4) am Gleichspannungsanschluss und die elektrische Maschine (6) am Wechselspannungsanschluss anschließbar ist; wobei die elektrische Maschine (6) unter Verwendung der im Energiespeicherelement (4) gespeicherten Energie betreibbar ist;
wobei ein Gleichspannungswandler (14) zwischen dem Energiespeicherelements (4) und einem Zwischenkreis des Konverters (8) angeordnet ist; wobei
eine externe Energiezufuhr (12) in den Gleichspannungswandler (14) einkoppelbar ist, zum Laden des Energiespeicherelementes (4); und wobei der Gleichspannungswandler (14) 3-phasig ausgebildet ist;
**dadurch gekennzeichnet, dass**
die externe Energiezufuhr (12) direkt an eine elektrische Verbindung zwischen jeder Phase des Gleichspannungswandler (14) und dem Zwischenkreis des Konverters (8) angeschlossen ist, und
bei Energiezufuhr jeder Phase des Gleichspannungswandler (14) über individuelle Schaltelemente (S1-S3) vom Zwischenkreis des Konverters (8) entkoppelbar ist.

2. Energieversorgungssystem gemäß Anspruch 1 , weiterhin aufweisend zumindest ein Schaltelement (S1-3) zum Koppeln bzw. Entkoppeln von Gleichspannungswandler (14) und Konverter (8); insbesondere wobei das Schaltelement (S1 -3) in einem entkoppelten bzw. offenen Zustand ist bei externer Energiezufuhr (12) und das Schaltelement (S1-3) in einem gekoppelten bzw. geschlossenen Zustand ist im Betriebsfall bzw. Fahrbetrieb.

3. Energieversorgungssystem gemäß Anspruch 1 oder 2, wobei die externe Energiezufuhr (12) durch eine Kopplung des Energieversorgungssystems (2) mit einem Stromnetz (12) erfolgt.

4. Energieversorgungssystem gemäß Anspruch 3,
wobei das Energieversorgungssystem (2) eingerichtet ist, bei Kopplung mit einem externen Stromnetz (12), im Energiespeicherelement (4) gespeicherte Energie an das Stromnetz (12) abgebbar bereitzuhalten.

5. Energieversorgungssystem gemäß einem der Ansprüche 1 bis 4, wobei die externe Energiezufuhr (12) zumindest 2-phasig ausgebildet ist, und wobei der Gleichspannungswandler (14) eine Phasenanzahl aufweist, die gleich oder größer der Phasenanzahl der externen Energiezufuhr (12) ist.

6. Energieversorgungssystem gemäß einem der Ansprüche 1 bis 4,
wobei die externe Energiezufuhr (12) 3-phasig eingerichtet ist.

7. Energieversorgungssystem gemäß einem der Ansprüche 1 bis 6, wobei der Gleichspannungswandler (14) eingerichtet ist eine nicht-konstante Spannung des Energiespeicherelementes (4) in eine im wesentlichen konstante Spannung an den Konverter (8) bereitzustellen; und/oder wobei der Konverter (8) eingerichtet ist, eine Wechselspannung für den Betrieb der elektrischen Maschine (6) bereitzustellen.

8. Energieversorgungssystem gemäß einem der Ansprüche 1 bis 7, wobei im Fahrbetrieb durch die elektrische Maschine (6) zurückgewonnene Energie im Energiespeicherelement (4) gespeichert werden kann.

9. Fahrzeug, insbesondere Elektro- oder Hybridfahrzeug, aufweisend ein Energieversorgungssystem (2) gemäß einem der vorhergehenden Ansprüche.

## Claims

1. Energy supply system (2) for vehicles, having an electrical machine (6);
a DC-to-AC converter (8) comprising a DC voltage connection and an AC voltage connection; and
an energy storage element (4);
wherein the energy storage element (4) can be connected to the DC voltage connection and the electrical machine (6) can be connected to the AC voltage connection; wherein the electrical machine (6) can be operated using the energy stored in the energy storage element (4); wherein a DC-to-DC converter device (14) is arranged between the energy storage element (4) and an intermediate circuit of the converter (8); wherein
an external energy supply (12) can be coupled into the DC-to-DC converter device (14) to charge the energy storage element (4); and wherein the DC-to-DC converter device (14) is of three-phase design;
**characterized in that**
the external energy supply (12) is connected directly to an electrical connection between each phase of the DC-to-DC converter device (14) and the intermediate circuit of the converter (8), and can be decoupled from the intermediate circuit of the converter (8) by way of individual switching elements (S1-S3) when energy is supplied to each phase of the DC-to-DC converter device (14) .

2. Energy supply system according to Claim 1, furthermore having at least one switching element (S1-3) for coupling or decoupling the DC-to-DC converter device (14) and the converter (8); in particular wherein the switching element (Sl-3) is in a decoupled or open state in the case of an external energy supply (12) and the switching element (S1-3) is in a coupled or closed state during operation or in a driving mode.

3. Energy supply system according to Claim 1 or 2, wherein the external energy supply (12) is achieved by coupling the energy supply system (2) to a power grid (12).

4. Energy supply system according to Claim 3, wherein the energy supply system (2) is configured, when it is coupled to an external power grid (12), to retain energy stored in the energy storage element (4) for possible output to the power grid (12).

5. Energy supply system according to one of Claims 1 to 4, wherein the external energy supply (12) is of at least two-phase design, and wherein the DC-to-DC converter device (14) has a number of phases that is equal to or greater than the number of phases of the external energy supply (12).

6. Energy supply system according to one of Claims 1 to 4, wherein the external energy supply (12) is of three-phase design.

7. Energy supply system according to one of Claims 1 to 6, wherein the DC-to-DC converter device (14) is configured to provide a non-constant voltage of the energy storage element (4) into a substantially constant voltage to the converter (8); and/or wherein the converter (8) is configured to provide an AC voltage for operating the electrical machine (6).

8. Energy supply system according to one of Claims 1 to 7, wherein, in the driving mode, energy recovered by the electrical machine (6) can be stored in the energy storage element (4).

9. Vehicle, in particular electric or hybrid vehicle, having an energy supply system (2) according to one of the preceding claims.

## Revendications

1. Système d'alimentation en énergie (2) pour véhicules, présentant
une machine électrique (6) ;
un convertisseur de tension continue en tension alternative (8) doté d'une borne de tension continue et d'une borne de tension alternative ; et
un élément accumulateur d'énergie (4) ;
l'élément accumulateur d'énergie (4) pouvant être connecté à la borne de tension continue, et la machine électrique (6) pouvant être connectée à la borne de tension alternative ;
la machine électrique (6) pouvant fonctionner en utilisant l'énergie accumulée dans l'élément accumulateur d'énergie (4) ;
un convertisseur continu-continu (14) étant disposé entre l'élément accumulateur d'énergie (4) et un circuit intermédiaire du convertisseur (8) ; dans lequel
un apport en énergie externe (12) peut être branché sur le convertisseur continu-continu (14) afin de charger l'élément accumulateur d'énergie (4) ; et
le convertisseur continu-continu (14) est réalisé de manière triphasée ;
**caractérisé en ce que**
l'apport en énergie externe (12) est connecté directement à une liaison électrique entre chaque phase du convertisseur continu-continu (14) et le circuit intermédiaire du convertisseur (8), et
en cas d'apport en énergie, chaque phase du convertisseur continu-continu (14) peut être débranchée du circuit intermédiaire du convertisseur (8) par des éléments de commutation individuels (S1 à S3).

2. Système d'alimentation en énergie selon la revendication 1, présentant en outre au moins un élément de commutation (Sl-3) pour brancher ou débrancher le convertisseur continu-continu (14) et le convertisseur (8) ; en particulier dans lequel l'élément de commutation (Sl-3) se trouve dans un état débranché ou ouvert en cas d'apport en énergie externe (12), et l'élément de commutation (Sl-3) se trouve dans un état branché ou fermé en cas de fonctionnement ou en mode conduite.

3. Système d'alimentation en énergie selon la revendication 1 ou 2, dans lequel l'apport en énergie externe (12) est effectué en branchant le système d'alimentation en énergie (2) sur un réseau électrique (12) .

4. Système d'alimentation en énergie selon la revendication 3, dans lequel, lorsqu'il est branché sur un réseau électrique externe (12), le système d'alimentation en énergie (2) est aménagé pour fournir en sortie vers le réseau électrique (12) l'énergie accumulée dans l'élément accumulateur d'énergie (4).

5. Système d'alimentation en énergie selon l'une quelconque des revendications 1 à 4, dans lequel l'apport en énergie externe (12) est réalisé au moins de manière biphasée, et le convertisseur continu-continu (14) présente un nombre de phases qui est égal ou supérieur au nombre de phases de l'apport en énergie externe (12).

6. Système d'alimentation en énergie selon l'une quelconque des revendications 1 à 4, dans lequel l'apport en énergie externe (12) est aménagé de manière triphasée.

7. Système d'alimentation en énergie selon l'une quelconque des revendications 1 à 6, dans lequel le convertisseur continu-continu (14) est aménagé pour fournir une tension non constante de l'élément accumulateur d'énergie (4) dans une tension substantiellement constante au convertisseur (8) ; et/ou dans lequel le convertisseur (8) est aménagé pour fournir une tension alternative pour le fonctionnement de la machine électrique (6).

8. Système d'alimentation en énergie selon l'une quelconque des revendications 1 à 7, dans lequel, en mode conduite, de l'énergie récupérée par la machine électrique (6) peut être accumulée dans l'élément accumulateur d'énergie (4).

9. Véhicule, en particulier véhicule électrique ou hybride, présentant un système d'alimentation en énergie (2) selon l'une quelconque des revendications précédentes.
